# EUROPEAN PATENT SPECIFICATION

(11) **EP 2 512 767 B1**
(45) Date of publication and mention of the grant of the patent: **27.01.2016**
(21) Application number: 10837786.2
(22) Date of filing: 16.11.2010
(51) Int. Cl.: B29C 41/28, B29C 41/38, B23K 26/26, B29C 65/16, G02F 1/13, B29L 31/00, B29C 33/38, B29C 65/00

(54) **CASTING BELT FOR PRODUCING TRANSCENDENTAL WIDE WIDTH FILM**
GUSSRIEMEN ZUR HERSTELLUNG EINER SCHICHT MIT TRANSZENDENTALER BREITE
RUBAN DE COULÉE POUR PRODUIRE UN FILM TRANSCENDANT LARGE

(30) Priority: 14.12.2009 KR 20090123684
(43) Date of publication of application: 24.10.2012
(73) Proprietor: SK Innovation Co., Ltd., Seoul 110-110 (KR)
(72) Inventor: KIM, Hyuk Jun, Daejeon 305-761 (KR); KIM, Ki Yup, Seoul 139-785 (KR); SON, Sung Ho, Daejeon 305-370 (KR); CHO, Yong Gyun, Daejeon 305-721 (KR); LEE, Chol Ho, Daejeon 302-120 (KR); HWANG, Yoo Seock, Daejeon 305-761 (KR)
(74) Representative: Bassil, Nicholas Charles
(86) International application number: PCT/KR2010/008090
(87) International publication number: WO 2011/074789

(56) References cited:
- EP-A1- 1 477 830
- EP-A2- 0 501 738
- WO-A1-2008/023502
- JP-A- H09 207 151
- JP-A- 2005 104 148
- US-A- 2 569 367
- US-A- 3 728 066
- US-A1- 2005 212 172
- US-A1- 2007 281 112
- US-A1- 2008 177 242

## Description

### Technical Field

The present invention relates to a casting belt used for manufacturing an optical film by means of a solvent casting process, in more detail, a casting belt for producing a transcendental wide width film which is used to produce a film in a gel state by casting a dope when manufacturing a film that is used for a polarizer of liquid crystal displays or optical compensation films.

### Background Art

Cellulose acylate films have high transparency and mechanical properties, and also have dimensional stability that is little dependent on humidity and temperature. Therefore, they are widely used as supports of optical materials requiring those features. In general, the cellulose acylate films are manufactured by casting a dope made by melting a solvent with polymer onto a continuous support.

The casting method can be largely divided into belt casting and drum casting in accordance with the types of continuous supports. The belt casting is a method that casts a dope on a belt, dries and separates a solvent, and conveys a film to the next process, while the drum casting is a method that casts a dope on a drum, separates it without drying, and conveys a film to the next process.

In general, the belt casting can manufacture a variety of films because it can control dry conditions of films, while the drum casting can be used for mass production, because it can perform high-speed casting. Both of the methods should accurately machine the surfaces of the drum and the belt, which are continuous supports, to implement a clean surface required for liquid crystal displays.

It is required to accurately polish the surfaces of both the belt and drum in order to accurately machine the surface of the continuous supports. The belt is manufactured by grinding and polishing a belt made of stainless steel while the drum is manufactured by plating nickel and hard chrome on a drum made of carbon steel and polishing it.

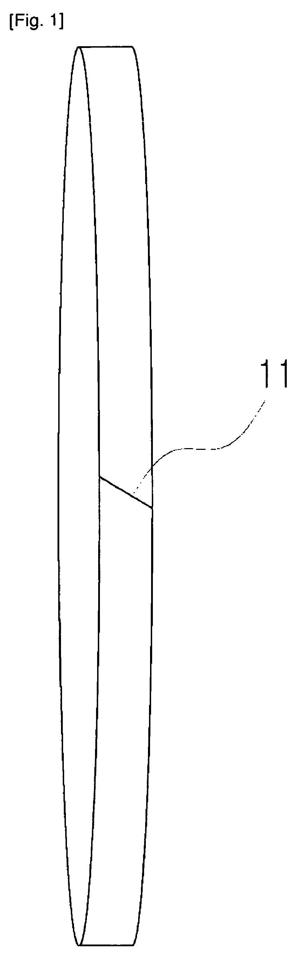

Although it is not a problem in the drum, referring to FIG. 1, it is required for the belt to forming a joint 11 connecting both ends of the belt to achieve a continuous support. Welding is widely used to form the joint, and TIG welding and laser welding are commonly used. The welding may be performed before polishing, and may be performed after polishing. The welded portion should be polished to prevent a problem in manufacturing a film, because the welded portion may remain on the belt after the welding. However, it is impossible to completely remove the welded portion and it is possible to see the welded portion with naked eyes. Therefore, some products are used with the welded portion cut off, when a polarizer or an optical compensation film is manufactured by using produced cellulose acylate.

Recently, the size of liquid crystal displays gradually increases, and accordingly, the width of polarizers and optical compensation films increases. Therefore, it needs to increase the width of cellulose acylate to come up with the increase in width and to increase yield in manufacturing the polarizers and optical compensation films.

Since a drum having a width of 2030mm or more can be manufactured by technologies that have been developed at the present time, a wide film can be manufactured, whereas it is known that a belt having a width of maximum 2030mm can be manufactured. Therefore, two belts can be longitudinally welded to achieve a wide belt having a width over 2030mm; however, a joint is formed at the center longitudinally between two belts by welding, such that the central joint is imprinted on a manufactured film and the film cannot be used itself. US 3728066 describes ajoint for a film. US 2005/212172 describes a solution casting method. WO 2008/023502 describes optical film, a method for manufacturing the same and a polarizing plate using the optical film. JP H09 207151 describes the production of a film by casting. US 2569367 describes an endless metal belt and method of making the same.

The dope cast on the belt is separated and manufactured in a film by a tender and a drier. The film contacts in the width direction from casting to separating, such that necessary extension is performed by the tender. The dimensions of the film are not largely changed in the drying process using the drier. In general, a trimming process that cuts off both ends of the film is performed to smoothly convey the film and keep the properties of the entire film, and the trimming process is performed at one to two times after the casting process, the tender process, and the drying process.

Therefore, when a belt having a width of 2030mm is used, the width of an available film is 2030mm or less. Considering stability, extension in the tender, and cutting-off of both ends of the film in the substantial casting, the available maximum width is 1800mm, such that it is difficult to manufacture a film according to the increase in width.

### Disclosure

### Technical Problem

The present invention provides a casting belt for producing a transcendental wide width film which makes it possible to manufacture a transcendental wide width film imprinting a welded portion on a film in manufacturing the film.

The present invention provides a casting belt for producing a transcendental wide width film which makes it possible to increase quality of a welded portion by using a jig for transverse welding with laser.

### Solution to problem

The present invention provides a casting belt where a polymer solvent is cast to form a gel-state film in manufacturing an optical film by means of a solvent casting process, wherein the casting belt 100 includes transverse welded portions 111 formed in the transverse direction of the casting belt 100 to connect adjacent casting belt sections 110 such that the adjacent casting belt sections 110 are longitudinally connected without welded portions longitudinally formed, the thickness t_{w} of the transverse welded portions is 0.95t_{b}≤t_{w}≤1.05t_{b} when the thickness of the casting belt sections 110 is t_{b}, and the size of pin holes formed in the transverse welded portions 111 is 20 ∼ 50 *µ*m and the depth is within 50 *µ*m.

In the present invention, the width W_{w} of the transverse welded portions 111 maybe within 2mm, the transverse welded portions 111 may make an angle of 20° with the transverse cross-section of the casting belt 100, and the width of the casting belt 100 maybe 2000mm or more.

### Advantageous Effects of Invention

According to the present invention, it is possible to manufacture a wide film having a width of 2000mm or more without imprinting welded portions, because casting belt sections that are longitudinally adjacent to each other are connected by transverse welded portions, not longitudinal welded portions that connects casting belt sections that are transversely adjacent to each other.

When a transcendental wide width casting belt is manufactured by longitudinal welding using laser, it is difficult to fix belts in welding and it is required to weld a long belt, such that it is difficult to satisfy quality required in manufacturing an optical film. However, a transcendental wide width casting belt is manufactured only by transverse welding, a jig can be used, such that, in the present invention, it is possible to perform transverse welding, with the casting belt sections fixed; therefore, it is possible to improve quality of the transverse welded portions.

Further, according to the present invention, it is possible to easily manufacture a film having a necessary width while satisfying limited conditions in an in-surface phase difference, an on-surface phase difference, and a thickness of a film, because it is possible to manufacture a wide film without increasing elongation of the film in the extending process of the manufacturing process of an optical film.

### Description of Drawings

The above and other objects, features and advantages of the present invention will become apparent from the following description of preferred embodiments given in conjunction with the accompanying drawings, in which:
- FIG. 1: is a perspective view of a casting belt of the related art.
- FIG. 2: is a perspective view of an embodiment of the present invention.
- FIG. 3: is a plan view of an embodiment of the present invention.

### [Detailed Description of Main Elements]

- 100 :: Casting belt
- 110 :: Casting belt sections
- 111 :: Transverse welded portion

### Best Mode for Carrying out the Invention

Hereinafter, an embodiment of the present invention will be described in detail with reference to the accompanying drawings.

An embodiment of the present invention relates to a casting belt for producing a transcendent wide width film according to the present invention.

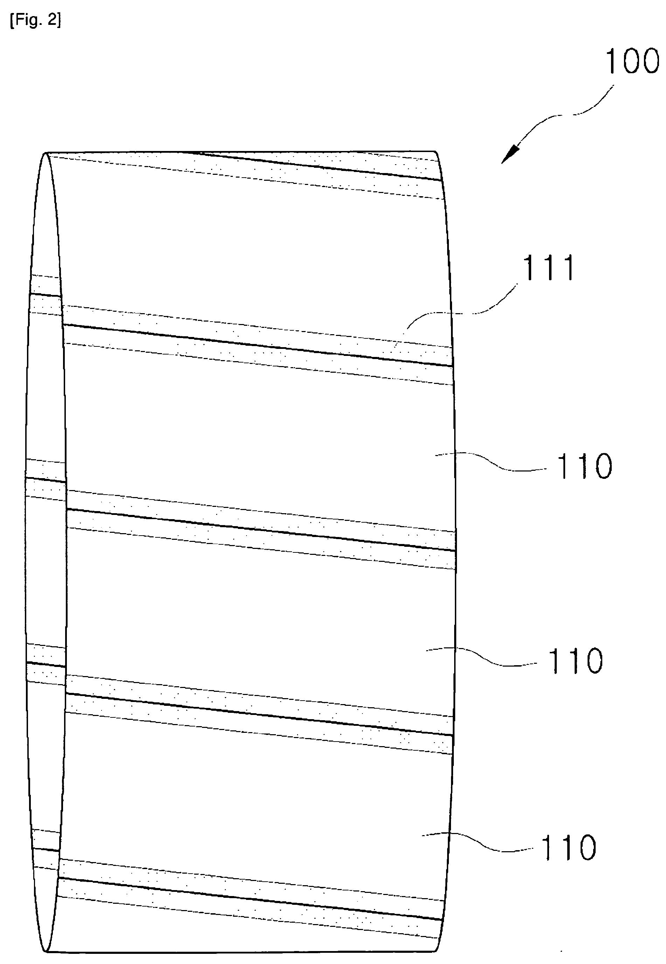

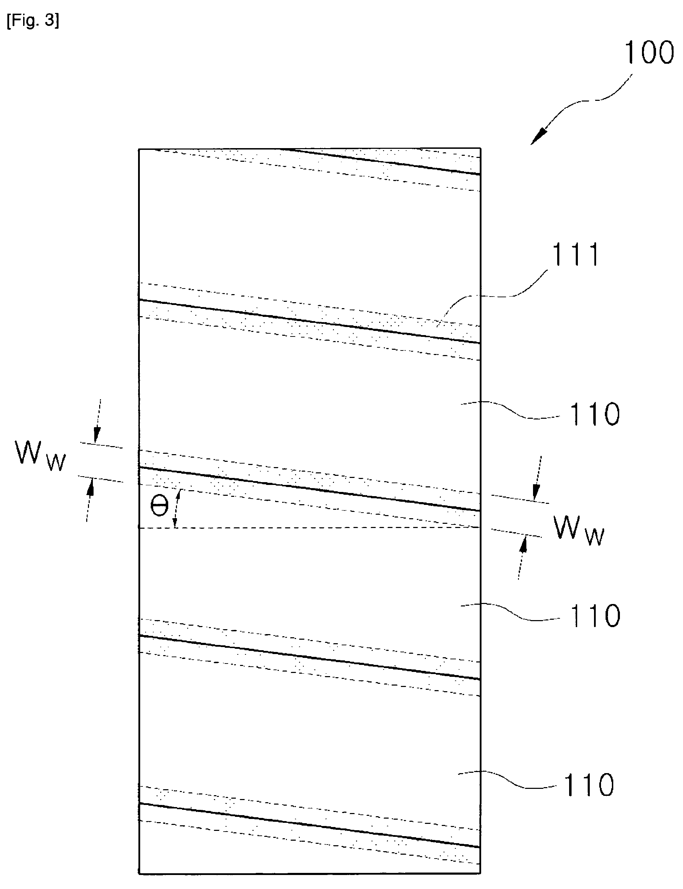

FIG. 2 is a perspective view of an embodiment of the present invention and FIG. 3 is a plan view of an embodiment of the present invention.

Manufacturing an optical casing by means of solvent casting performs a casting process that casts a dope containing a polymer solution on a belt to manufacture a film, using the polymer solution, a separating process that separates a gel-state film formed in the casting process, an extending process that extends the separated film with a tender, a drying process that dries the extended film, and a winding process that winds the dried film.

An embodiment of the present invention relates to a belt that is used in a casting process for manufacturing an optical film by means of solvent casting, that is, a casting belt for manufacturing a transcendental wide width where a dope containing a polymer solvent is cast to form a gel-state film. Referring to FIG. 2, a casting belt 100 for manufacturing a transcendental wide width film is composed of five casting belt sections 110. The sizes and shapes of the casting belt sections 110 may be the same.

Referring to FIG. 2, the casting belt sections 110 adjacent to each other in the longitudinal direction of the casting belt 100 is connected by transverse welded portions 111. That is, the transverse welded portions 111 are joints that connect the adjacent casting belt sections 110 longitudinally arranged, to make a continuous belt from the casting belt sections 110. The transverse welded portions 111 are formed by welding, for example, YAG laser welding or common laser welding.

Referring to FIG. 3, when the transverse welded portion is formed by the YAG welding, the width W_{w} of the transverse welded portion 111 can be within 1mm, and when it is formed by the common laser welding, the width W_{w} of the transverse welded portion 111 can be within 2mm. When the width of the transverse welded portion 111 is large, the welded portion is likely to be imprinted on a film, such that it is preferable that the width W_{w} of the transverse welded portion 111 is within 2mm.

Referring to FIG. 3, the transverse welded portion 111 is formed at an angle of θ, 20°, from the transverse cross-section of the casting belt 100. This is for preventing the transverse welded portion 111 from breaking by maximally distributing the force applied to the casting belt sections 110 in an operation with tension exerted in the casting belt 110 for manufacturing a transverse wide width film.

Thought not shown in the drawings, pin holes are formed in the transverse welded portion 111, and the size of the pin hole is 20 ∼ 50 *µ*m and the depth is within 50 *µ*m. Blowholes are formed in welding, and they are made in the pin holes. It is known that the maximum size of the pine hole which can be seen by naked eyes of common people is 20 *µ*m. Therefore, the size may not case a problem up to 50 *µ*m, but larger sizes have a limit in being used for films for LCDs.

On the other hand, though not shown in the drawings, when the thickness of the casting belt sections 110 is t_{b}, the thickness t_{w} of the transverse welded portion is 0.95t_{b}≤tₓ≤1.05t_{b}. That is, the difference in thickness of the transverse welded portion 111 and the other portions is within 5%. This is for prevent the welded portion from being imprinted on the film in solvent casting.

Meanwhile, the width of the casting belt 100 is 2000 or more, for example, 2000mm or 2030mm, which is the maximum belt width in the related art.

The present invention has the advantage that it is possible to manufacture a transverse wide width film having a width of 1800mm or more, without imprinting the transverse welded portions 111 on the film, by reducing the size and depth of the pin holes formed in the transverse welded portions 111 and reducing the difference in thickness of the transverse welded portions 111 and the other portions. That is, when an optical film is manufactured by solvent casting, the surface state of the film is largely influenced by the surface state of the belt, as compared with common extrusion casting; however, according to the present invention, it is possible to achieve a wide film without a welded portion imprinted.

When the transcendental wide width casting belt 100 is manufactured by longitudinal welding using laser, it is impossible to fix the left belt at the transversely left side and the right belt connected to the left belt, at the transversely right side, because a jig cannot be used, such that defects are easily generated in the welded portion due to bad longitudinal welding. The present invention manufactures the casting belt for producing a transverse wide width film by performing transverse welding that transversely welds the casting belt 100, not longitudinal welding that longitudinally welds the casting belt 100. On the other hand, when the transverse wide width casting belt 100 is manufactured by transverse welding using laser, a jig can be used, such that, in the present invention, it is possible to perform transverse welding, with the casting belt sections 110 fixed; therefore, it is possible to improve quality of the transverse welded portions 111.

The present invention has the advantage of easily manufacturing a film having a necessary width while satisfying limited conditions in an in-surface phase difference, an on-surface phase difference, and a thickness of a film, because it is possible to manufacture a wide film without increasing elongation of the film in the extending process of the manufacturing process of an optical film.

## Claims

1. A casting belt for producing a transverse width film having a width of at least 1800mm, where a polymer solvent is cast to form a gel-state film in manufacturing an optical film by means of a solvent casting process, wherein the casting belt 100 includes a plurality of transverse welded portions 111 formed in the transverse direction of the casting belt 100 to connect adjacent casting belt sections 110 such that the adjacent casting belt sections 110 are longitudinally connected without welded portions longitudinally formed, wherein the transverse welded portions 111 are formed by YAG laser welding or common laser welding, wherein the thickness t_{w} of the transverse welded portions 111 is 0.95t_{b}≤t_{w}≤1.05t_{b} when the thickness of the casting belt sections 110 is t_{b}, wherein the transverse welded portions 111 include pin holes having a diameter of 20-50 µm and a depth of within 50 µm and wherein the width W_{w} of the transverse welded portions 111 is within 2 mm.

2. The casting belt for producing a transverse width film according to claim 1, wherein the transverse welded portions 111 make an angle of 20° with the transverse cross-section of the casting belt 100.

3. The casting belt for producing a transverse width film according to claim 2, wherein the width of the casting belt 100 is 2000mm or more.

## Patentansprüche

1. Gießband zum Herstellen einer Folie mit Quererstreckung, die eine Breite von wenigstens 1800 mm hat, wobei ein Polymer-Lösungsmittel gegossen wird, um eine Folie im Gelzustand beim Herstellen einer optischen Folie mittels eines Lösungsmittel-Gießverfahrens auszubilden, wobei das Gießband 100 eine Vielzahl quer verlaufender Schweißabschnitte 111 aufweist, die in Querrichtung des Gießbands 100 ausgebildet sind, um benachbarte Gießbandabschnitte 110 zu verbinden, so dass die benachbarten Gießbandabschnitte 110 ohne längs ausgebildete Schweißabschnitte der Länge nach verbunden werden, wobei die quer verlaufenden Schweißabschnitte 111 durch YAG Laserschweißen oder herkömmliches Laserschweißen gebildet werden, wobei die Stärke t_{w} der quer verlaufenden Schweißabschnitte 111 0,95 t_{b} ≤ t_{w} ≤ 1,05 t_{b} ist, wenn die Stärke der Gießbandabschnitte 110 t_{b} ist, wobei die quer verlaufenden Schweißabschnitte 111 Pinholes mit einem Durchmesser von 20 ∼ 50 µm und einer Tiefe innerhalb 50 µm haben, und wobei die Breite W_{w} der quer verlaufenden Schweißabschnitte 111 innerhalb 2 mm beträgt.

2. Gießband zum Herstellen einer Folie mit Quererstreckung nach Anspruch 1, wobei die quer verlaufenden Schweißabschnitte 111 mit dem transversalen Querschnitt des Gießbands 100 einen Winkel von 20° einschließen.

3. Gießband zum Herstellen einer Folie mit Quererstreckung nach Anspruch 2, wobei die Breite des Gießbands 100 2000 mm oder mehr beträgt.

## Revendications

1. Ruban de coulée pour produire un film transversal large ayant une largeur d'au moins 1 800 mm, où un solvant de polymère est coulé pour former un film à l'état de gel dans la production d'un film optique au moyen d'un processus de coulée de solvant, dans lequel le ruban de coulée 100 comprend une pluralité de parties soudées transversales 111 formées dans la direction transversale du ruban de coulée 100 pour relier des sections de ruban de coulée 110 adjacentes de telle sorte que les sections de ruban de coulée 110 adjacentes sont reliées dans le sens de la longueur sans parties soudées formées longitudinalement, dans lequel les parties soudées transversales 111 sont formées par soudage laser YAG ou soudage laser commun, dans lequel l'épaisseur t_{w} des parties soudées transversales 111 est de 0,95 t_{b} ≤ t_{w} ≤ 1,05 t_{b} lorsque l'épaisseur des sections de ruban de coulée 110 est t_{b}, dans lequel les parties soudées transversales 111 comprennent des piqûres ayant un diamètre de 20 à 50 µm et une profondeur comprise dans 50 µm et dans lequel la largeur W_{w} des parties soudées transversales 111 est comprise dans 2 mm.

2. Ruban de coulée pour produire un film transversal large selon la revendication 1, dans lequel les parties soudées transversales 111 forment un angle de 20° avec la section transversale du ruban de coulée 100.

3. Ruban de coulée pour produire un film transversal large selon la revendication 2, dans lequel la largeur du ruban de coulée est de 2 000 mm ou plus.
